# FASCICULE DE BREVET EUROPEEN

(11) **EP 2 092 367 B1**
(45) Date de publication et mention de la délivrance du brevet: **22.01.2014**
(21) Numéro de dépôt: 07847859.1
(22) Date de dépôt: 05.12.2007
(51) Int. Cl.: G01S 13/78

(54) **PROCEDE DE REDUCTION DES EFFETS DUS AUX PROPAGATIONS MULTITRAJETS LORS DU TRAITEMENT DE REPONSES EN MODE "S"**
VERFAHREN ZUR VERRINGERUNG VON MEHRWEGEAUSBREITUNGSEFFEKTEN WÄHREND DER VERARBEITUNG VON ANTWORTEN IM MODUS S
METHOD FOR REDUCING MULTIPATH PROPAGATION EFFECTS DURING THE PROCESSING OF REPLIES IN MODE "S"

(30) Priorité: 12.12.2006 FR 0610815
(43) Date de publication de la demande: 26.08.2009
(73) Titulaire: Thales, 92200 Neuilly Sur Seine (FR)
(72) Inventeur: BILLAUD, Philippe, 92260 Fontenay aux Roses (FR)
(74) Mandataire: Esselin, Sophie
(86) Numéro de dépôt international: PCT/EP2007/063370
(87) Numéro de publication internationale: WO 2008/071607

(56) Documents cités:
- EP-A- 1 316 817
- EP-A- 1 635 189
- EP-A- 1 640 743
- EP-A1- 0 426 543
- EP-A1- 0 577 480
- WO-A-2005/085898
- FR-A1- 2 860 882
- US-A- 5 528 244
- US-A- 5 825 322
- US-A- 5 835 059
- GALATI G ET AL: "Decoding Techniques for SSR Mode S Signals in High Traffic Environment" RADAR CONFERENCE, 2005. EURAD 2005. EUROPEAN OCT. 6, 2005, PISCATAWAY, NJ, USA,IEEE, 6 octobre 2005 (2005-10-06), pages 399-402, XP010910900 ISBN: 2-9600551-3-6
- CHEN SHI-YI ET AL: "Error Correcting Cyclic Redundancy Checks based on Confidence Declaration" ITS TELECOMMUNICATIONS PROCEEDINGS, 2006 6TH INTERNATIONAL CONFERENCE ON, IEEE, PI, juin 2006 (2006-06), pages 511-514, XP031012474 ISBN: 0-7803-9586-7
- HARMAN W ET AL: "Techniques for improved reception of 1090 MHz ADS-B signals" DIGITAL AVIONICS SYSTEMS CONFERENCE, 1998. PROCEEDINGS., 17TH DASC. THE AIAA/IEEE/SAE BELLEVUE, WA, USA 31 OCT.-7 NOV. 1998, NEW YORK, NY, USA,IEEE, US, vol. 2, 31 octobre 1998 (1998-10-31), pages G25-1, XP010318180 ISBN: 0-7803-5086-3

## Description

La présente invention se rapporte à un procédé de réduction des effets dus aux propagations multitrajets lors du traitement de réponses en mode « S » de détection de cibles telles que des aéronefs, par des radars secondaires de surveillance (communément dénommés SSR).

Dans certains cas de réception de signaux d'échos radar, cette réception peut être polluée par des signaux parasites dus à des multitrajets de forte puissance dans différentes directions. Dans ces conditions, les traitements de signal mode S actuels connus n'arrivent pas à traiter correctement les réponses mode S. Il en résulte des pertes de détection d'aéronefs inacceptables.

On rappelle ici que le principe du mode S est l'interrogation sélective des aéronefs en exploitant l'information mono-impulsion pour arriver, en une seule interrogation dans le lobe, à « localiser » et « décoder » avec une quasi certitude (calcul d'un CRC, c'est-à-dire un code de redondance cyclique) le message transmis par le transpondeur bord. Des algorithmes ont donc été développés dans cette optique allouant donc toute la finalité au traitement d'une réponse.

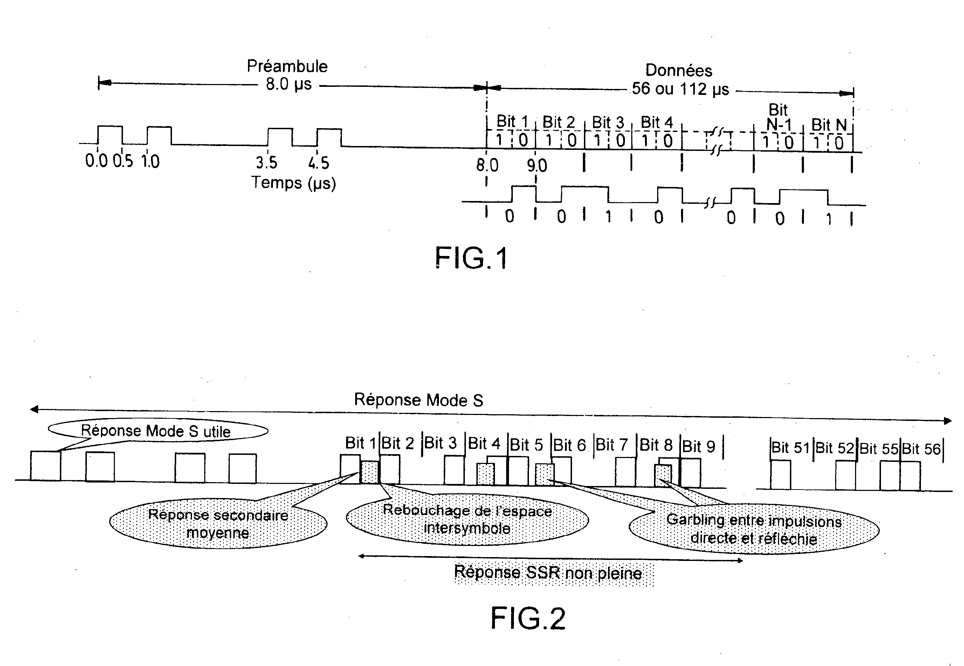

Les caractéristiques du standard Mode S (standard ICAO, Annexe 10) sont :
- Le principal objectif est d'effectuer la détection et la localisation (en 3D : azimut, distance, altitude) d'un aéronef en une seule interrogation. Ainsi EUROCONTROL, tout comme le STNA pour la France, ont défini une métrique : le nombre d'interrogations par tour d'antenne radar et par aéronef, en plus de la probabilité de détection. On voit ainsi qu'en plus de la performance radar classique, la manière dont elle est obtenue est jugée importante (indicateur d'efficacité),
- La réponse Mode S (voir un exemple simplifié en figure 1) est, par constitution, bien plus longue (64µs ou 120µs) et plus dense que la réponse SSR (21µs) et par suite plus sensible aux multitrajets : l'espace entre deux impulsions Mode S est soit de 500ns soit de 1µs, alors qu'il est de l'ordre de 1µs, 2.45µs, 3.45µs, ... pour une réponse SSR. Donc, la probabilité qu'un multitrajet d'une réponse pollue les impulsions de cette même réponse est bien plus élevée en Mode S qu'en SSR
- Les données échangées entre le sol et le bord doivent être fiables : un taux d'erreur de 10⁻⁷ est requis par la spécification de la station Mode S selon le standard d'EUROCONTROL. Pour cela, le standard a prévu un code correcteur d'erreurs (CRC sur 24bits) permettant de détecter si le message est altéré. Ce code a été conçu pour faire face au mélange (« garbling ») entre réponses secondaires classiques (21µs de durée, au plus 14 impulsions de 450ns polluées, soit en moyenne 8 impulsions polluées par réponse, réparties sur 21 µs)
- En pratique, pour tenir les exigences de sécurité des données échangées, on réalise la correction d'au plus 10 bits espacés de moins de 24 µs dans le message Mode S. Ainsi, une réponse SSR plus riche en impulsions que la moyenne (code ayant plus de 6 impulsions sur les 12 possibles), peut polluer plus de 10 bits du message Mode S, et par suite rendre une réponse Mode S non corrigible (voir figure 2).
- Le traitement de signal réalise à la fois le décodage de la réponse mode S et le marquage des bits du message (1bit dure 1µs) pouvant être erronés (de mauvaise qualité). Par principe du standard Mode S, ce ne sont que ces bits marqués qui pourront être utilisés lors de la correction par le code correcteur d'erreurs.

Ce concept, mis en oeuvre dans un environnement de propagation propre, face à des « garblings » (signaux parasites) qui évoluent d'interrogation à interrogation de par la sélectivité de l'interrogation, est totalement opérationnel. En présence de multitrajets forts, qui restent par définition « collés » à la réponse, le concept ne résiste plus : chaque réponse est analysée et rejetée indépendamment de l'autre.

En effet, avec les procédés actuellement connus, il arrive que les réponses mode S reçues soient autopolluées systématiquement par multitrajet :
- des réflexions « on line » (dans l'axe de l'antenne)
- et/ou « en latéral » (légèrement décalées de l'axe de l'antenne).

Le traitement de signal mode S est optimisé pour le traitement d'une réponse par lobe, et donc le décodage et la correction du message sont effectués sur une seule réponse. Quand il y a échec, automatiquement une nouvelle interrogation est émise et à nouveau la fonction de traitement de signal (ci-après simplement dénommée TS) exploite la nouvelle réponse. En présence de multitrajets, il y a échec à nouveau. Tant que la cible est dans le lobe de réception du radar et que la réponse n'a pas pu être décodée, une nouvelle inetrrogation est générée. Donc, quand les multitrajets sont forts, le nombre d'interrogations sélectives pour une cible polluée peut, à terme, être égal à celui que le traitement secondaire produisait en mode non sélectif. Mais comme la décision de décodage est prise à chaque réponse, il y a globalement échec dans tout le lobe.

Il est connu, notamment par le brevet américain US 5 528 244, un traitement de signal amélioré en mode S pour traiter des réponses souffrant de distorsions dues à des trajets multiples.

Les dispositifs de l'art antérieur s'attachaient principalement au traitement de signal (TS) pour effectuer au mieux les fonctions de décodage et d'affectation de qualité puisque ensuite, de par le standard Mode S, la méthode de détection d'erreurs comme l'efficacité de la correction étaient imposées par le code employé et le taux de fausses corrections demandé.

Le TS exploite pour chaque réponse les informations disponibles à la sortie du récepteur, qui est relié à l'antenne radar, à savoir :
- les détections de puissance sur les voies SOMME (« SUM ») et DIFFERENCE,
- l'information de phase représentant le dépointage de la cible dans le lobe (information dite « monopulse » et ainsi dénommée par la suite).

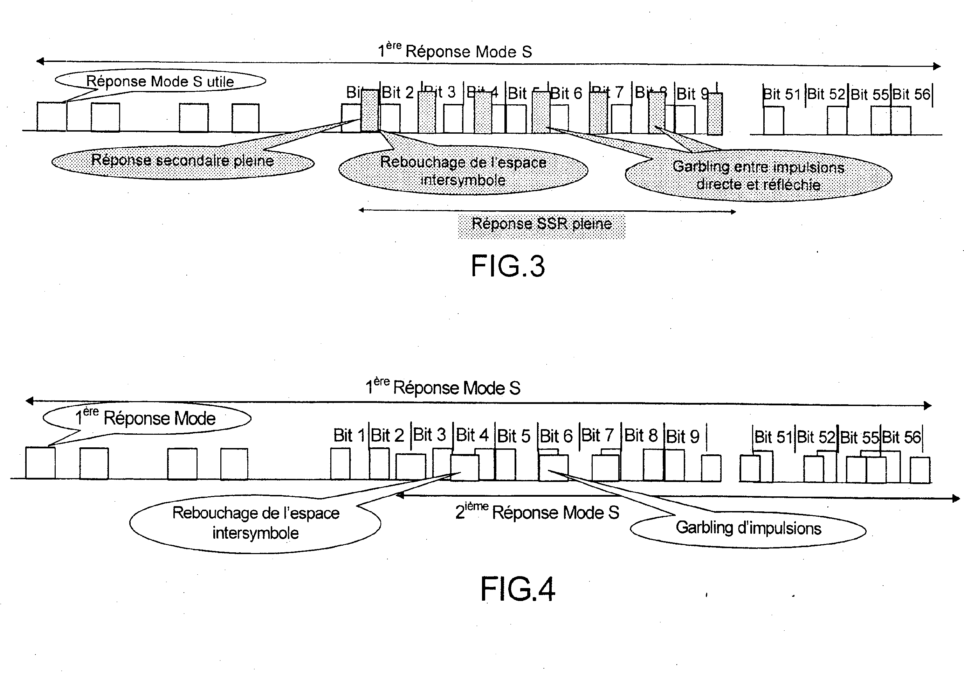

En référence aux figures 3 à 5, on va décrire trois cas typiques de pollution de la réponse Mode S :
- par des fruits SSR,
- par des réponses Mode S synchrones.
- par des multitrajets de la réponse Mode S,

Le principe de correction décrit ci-dessus ne résiste pas à certaines configurations extrêmes rencontrées sur différents sites radar dont on peut extraire trois cas exemplaires (mais non limitatifs) :
- cas de la figure 3, rencontré en Europe du Nord : dans un environnement pollué par des réponses secondaires asynchrones nombreuses (dénommées « fruits »), il est probable que d'interrogation sélective Mode S à la suivante les réponses associées soient polluées à chaque fois par une réponse SSR-fruit de puissance nettement plus élevée que la réponse mode S (cas d'une cible utile à grande distance 470km et de fruit généré par des cibles proches du radar en question, mais répondant à un radar lointain). Les fruits étant asynchrones, provoquent des erreurs sur des bits différents d'une réponse Mode S à la suivante. Sur la figure 3, on a représenté au début de la ligne temporelle les quatre impulsions de préambule de réponse Mode S non polluées. Viennent ensuite des bits de données (référencés Bit 1 à Bit 56 sur la figure), dont les premiers sont pollués par des impulsions parasites d'une réponse SSR de code plein (représentés grisés sur la figure, et d'amplitude supérieure à celle des bits utiles) arrivant de manière asynchrone par rapport aux impulsions utiles. De telles impulsions parasites peuvent aussi bien boucher des espaces inter-symboles que chevaucher de façon plus ou moins importante des impulsions directes.
- Un deuxième cas est illustré par la figure 4. La pollution est due à des réponses parasites synchrones provenant d'aéronefs différents pour des interrogations d'un même radar. En phase d'acquisition des réponses mode S (« All Call ») dans un environnement chargé en cibles tel qu'un couloir aérien en Europe du Nord, les réponses mode S utiles se polluent mutuellement de façon synchrone. Le taux de bits faux dépend du taux de recouvrement des réponses Mode S entre elles. De récurrence à récurrence, les bits erronés peuvent ne pas être toujours les mêmes à cause de battements entre les signaux de fréquence différentes. Ainsi, dans le cas de la figure 4, alors qu'un radar commence à recevoir une réponse Mode S d'un premier aéronef, une réponse provenant d'un deuxième aéronef commence à arriver à partir du deuxième bit de données de la première réponse. Les quatre impulsions de synchronisation sont telles que la première d'entre elles se place entre la deuxième et la troisième impulsions de la première réponse, alors que les trois autres chevauchent de façons différentes les impulsions Bit 3 à Bit 7 de la première réponse, du fait que les distances respectives des impulsions de synchronisation ne sont pas les mêmes que celles des impulsions de données. Ensuite, les impulsions de données de la deuxième réponse chevauchent les impulsions de données de la première.

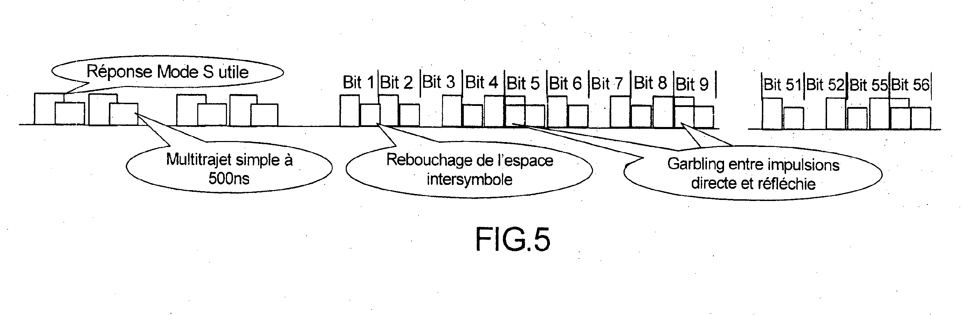

- La figure 5 se rapporte au cas d'un propagation multitrajet d'une même réponse. En présence de multitrajets forts, quand le TS décode mal des bits, ceux-ci sont répartis n'importe où dans la réponse puisque, par nature, le multitrajet peut polluer tous les bits du message. En effet, les multitrajets étant la même réponse répétée et décalée dans le temps d'une durée pouvant atteindre 3 µs, les bits mal décodés dépendent du message lui-même et des battements des signaux (réponse directe et des multitrajets) dans le récepteur, ce qui déforme les impulsions à la sortie du récepteur. Par suite, le TS qui exploite la puissance reçue, peut mal positionner les impulsions, mal affecter une puissance à celles-ci et en conséquence mal décoder la réponse. Or, le principe du code détecteur d'erreur ne peut permettre de corriger des erreurs espacées de plus de 24µs. D'une réponse Mode S à la suivante, les bits erronés ne sont pas les mêmes, car la distorsion des impulsions due au battement entre l'onde directe et les ondes réfléchies dépend de la différence de marche qui évolue suffisamment de récurrence à récurrence (10ms)

Le marché, dans les nouvelles utilisations des radars Mode S, accroît la nécessité de détecter une cible sur la base de peu d'interrogations Mode S, au delà même du besoin d'avoir un bon indicateur d'efficacité puisque :
- la vitesse de rotation de l'antenne du radar de surveillance est accrue : souvent un tour en 4 secondes pour une portée de 470km. En conséquence, le temps d'éclairement sur une cible est réduit et par suite la possibilité de réinterroger en cas d'échec est plus limitée,
- les transactions de données Mode S requièrent du temps d'éclairement sur la cible, réduisant ainsi le nombre de récurrences possible pour une ré-interrogation en cas d'échec lors de l'essai précédent. Les radars militaires demandent des interrogations supplémentaires dans des modes militaires spécifiques (1 et 2), réduisant ainsi encore plus le nombre de récurrences pour le mode S.

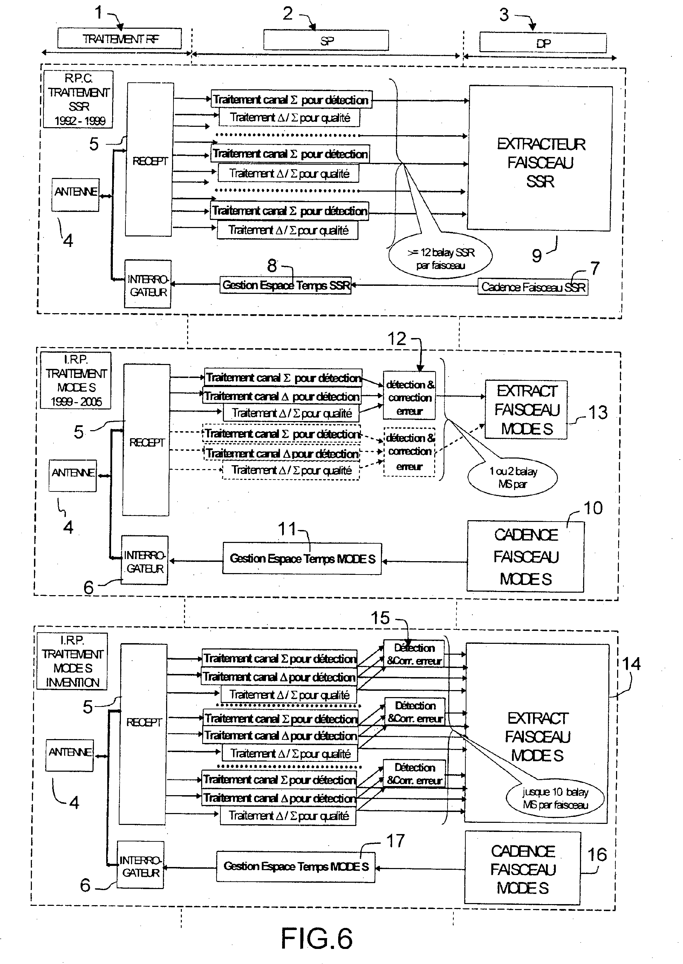

Le traitement de réponses de radars secondaires réalisé par le Demandeur depuis les années 90 a connu deux principaux développements, qui sont illustrés sur les blocs-diagrammes de la figure 6 (en haut et au milieu, respectivement), de même que la solution de l'invention (schématisée dans le bas de la figure). Les radars secondaires mettant en oeuvre ces trois techniques différentes d'extraction comportent tous trois étages principaux, correspondant à trois étapes principales du traitement d'extraction de plots et représentés dans les mêmes colonnes du dessin : un étage 1 de traitement radio-fréquence, un étage 2 de traitement de signal (dénommé ci-après SP) et un étage 3 de traitement de données (dénommé ci-après DP). L'étage 1 est le même pour les trois réalisations. Il comporte essentiellement une antenne radar 4, un récepteur 5 et un interrogateur 6. Pour l'étage 2, on a schématisé, à la sortie du récepteur de chacun des trois procédés, plusieurs traitements successifs de détection et de détermination de qualité les uns sous les autres, correspondant à des interrogations successives.

Les deux techniques connues sont les suivantes :
1. « Reply Processing and Correlator R.P.C. ». Il s'agit d'un extracteur secondaire développé dans les années 1992-1999 et pour lequel plusieurs brevets ont été déposés, ne portant que sur le traitement de signal SSR (Radar Secondaire de Surveillance) innovant, caractérisé par un fort pouvoir de discrimination basé sur l'analyse de forme des signaux reçus sur le canal Σ. Le principe du traitement secondaire repose sur l'interrogation systématique de toutes les cibles présentes dans le lobe à raison d'une douzaine de réponses (six en mode A et six en mode C) par cible dans le lobe. Les principales fonctionnalités sont gérées de la façon suivante (voir figure 6):
   o La Gestion Spatio- Temporelle (GST) : elle est gérée par les éléments 7 (cadencement du faisceau) et 8 (GST) et elle est très simple puisque le séquencement est systématiquement constitué d'interrogations mode A et mode C entrelacées.
   o Le Traitement de signal (TS) :
      ■ Il détecte et décode les réponses SSR sur la base de l'analyse de forme des signaux reçus sur le canal Σ,
      ■ Il établit une qualité construite sur la base de l'analyse des informations Σ et Δ/Σ.
   o Le Traitement de Données -TD- (9) réalise l'extraction du plot sur la base :
      ■ du nombre de détections par mode ou tout mode pour détecter le plot,
      ■ de l'élaboration des codes mode A/mode C par analyse des codes obtenus dans chaque mode associé à leurs qualités et basé sur un estimateur pour chaque impulsion du code exploitant les drareaux (flags donnant les risques de garbling d'une réponse donc son potentiel d'être correctement décodé).
   Les blocs du diagramme du dessin font ressortir le degré de complexité des diverses fonctions principales rappelées ci-dessus:
   - la Gestion Spatio- Temporelle (GST) : faible complexité,
   - le Traitement de signal (TS) : complexité moyenne,
   - le Traitement de Données (TD) : complexité moyenne.
2. «Interrogator and Reply Processing» ou « I.R.P. » C'est un extracteur secondaire développé dans les années 1999-2005. Plusieurs demandes de brevets ont été déposées pour le Traitement de Signal Mode S innovant dans l'optique d'un fort pouvoir de discrimination basée sur des histogrammes des impulsions définies par l'analyse de forme des signaux reçus sur Σ et sur Δ, et une autre a été déposée pour le Traitement de Données Mode S innovant dans le séquencement des interrogations sélectives Mode S. Le principe du traitement Mode S repose sur l'interrogation sélective de chaque cible dans le lobe à raison d'une à deux réponses par cible dans le lobe:
   o La Gestion Spatio-Temporelle (GST) : elle est gérée par les éléments 10 (cadencement du faisceau en mode S) et 11 (GST en mode S) : elle est très sophistiquée, puisque le séquencement est conditionné à la fois par le séquencement principal choisi par l'opérateur dans lequel doit venir s'inscrire en temps réel l'ensemble des interrogations sélectives et le placement des fenêtres d'écoute associées aux réponses attendues d'une cible choisie (50 cibles par lobe),
   o Le Traitement de signal (TS) : il est très sophistiqué :
      - Il détecte les impulsions Mode S sur la base de l'analyse de forme des signaux reçus sur les canaux Σ et Δ et d'histogramme des impulsions ,
      - Il établit une qualité construite de chaque impulsion sur la base d'histogrammes des impulsions Σ, Δ et Δ/Σ,
      - Il assure la détection de la réponse sur la base des impulsions détectées,
      - Il assure le décodage du message de la réponse sur la base des impulsions détectées et des qualités associées pour chaque bit du message,
      - Il effectue (en 12), indépendamment pour chaque réponse, le calcul du syndrome d'erreur du message, et en cas de besoin, il tente de corriger le message sur la base de la qualité associée à chaque impulsion.
   ○ Le Traitement de Données (TD) réalise simplement (en 13) l'association des réponses pour une cible déjà isolée par le SP et le calcul de ses caractéristiques générales (puissance, azimut, distance).

Les blocs du diagramme du dessin font ressortir le degré de complexité des diverses fonctions principales rappelées ci-dessus:
- la Gestion Spatio- Temporelle (GST) : très complexe,
- le Traitement de signal (TS) : très complexe,
- le Traitement de Données (TD) : faible complexité.

Actuellement, le SP détermine, pour chaque réponse détectée, une valeur de référence selon les trois variables classiques (en SOMME, en DIFFERENCE et en « MONOPULSE ») ainsi que le nombre maximum d'échantillons cohérents vis-à-vis de cette valeur pour les trois dites variables, ces échantillons étant appelés par la suite « échantillons cohérents ». Ceci indique en outre la qualité globale de la réponse : plus ce nombre maximum d'échantillons cohérents est élevé, plus la qualité globale est claire (non polluée).

Le décodage de chaque bit, ainsi que la qualité (incertitude sur sa valeur), est établi en rapport avec la position de l'impulsion ou des impulsions dans la période du bit et de la valeur selon les trois dites variables de/des impulsions en rapport avec la valeur de la réponse pour ces trois variables.

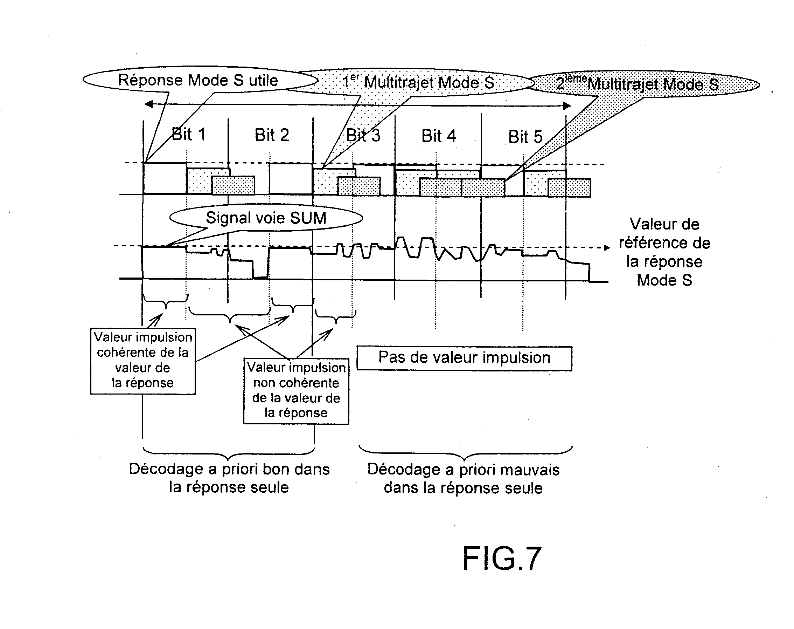

Le diagramme synoptique de la figure 7 est, en exemple, un zoom sur quelques bits du message. Il montre la difficulté à décoder certains bits quand le message est pollué par plusieurs multitrajets :
- la première ligne est une représentation simplifiée des signaux reçus en entrée du récepteur :
   ■ le signal utile de la réponse
   ■ un multitrajet légèrement plus faible décalé de 500ns
   ■ un second multitrajet plus faible décalé de 800ns
- la seconde ligne montre pour la voie SOMME ou la voie DIFFERENCE le signal en sortie du récepteur qu'exploite le TS pour définir la présence d'une impulsion et sa valeur. Le trait en pointillé figure la puissance de la réponse calculée sur l'ensemble des impulsions en position d'appartenir à la réponse
- la partie du bas de la figure donne un possible résultat du TS portant sur l'établissement des valeurs de l'impulsion.

La présente invention a pour objet un procédé de traitement de réponses en mode « S » d'aéronefs interrogés par un radar, permettant de réduire de façon significative les effets dus aux propagations multitrajets, et qui permette de prendre en compte chaque réponse, quels que soient les multitrajets parasites et de conserver la probabilité de détection (Pd) contractuelle, même dans de mauvaises conditions de propagation.

Le procédé de traitement conforme à l'invention est un procédé de traitement de réponses de cibles interrogées par un radar de surveillance pour des interrogations en mode S, indépendamment pour chaque cible présente dans le lobe de réception du radar, comprenant :
- une étape d'au moins une interrogation des les différentes cibles présentes dans le lobe de réception du radar SSR,
- une étape de réception, après chaque interrogation, de l'ensemble des signaux de réponse reçus pour ce lobe pour chaque cible,
- une étape de détection des réponses mise en oeuvre par un module de traitement de signal (TS)
- une étape de détection et de correction d'erreurs et
- une étape d'extraction des plots correspondants,
   ledit traitement de détection et de détermination de qualité des signaux étant mis en oeuvre, en cas d'échec de décodage par le traitement de signal, par un module de traitement de données (TD) qui constitue un message synthétique avec l'ensemble mémorisé des réponses à chaque interrogation pour une même cible, établi, pour chaque bit de chaque message, la valeur et la qualité de ce bit et effectue la détection et la correction d'erreurs à partir de ce message synthétique, et en ce que pour chaque réponse Mode S non décodée à la suite d'une tentative de correction effectuée sans succès par le traitement de signal, ou non décodable par suite d'un trop grand nombre de bits de mauvaise qualité dans un message incorrect pour tenter la correction, le module de traitement de signal (TS) transmet :
- la valeur de la réponse pour les trois variables de sortie du récepteur radar (SOMME, DIFFERENCE et MONOPULSE) ainsi que le nombre maximum d'échantillons cohérents avec cette valeur pour les trois variables,
- pour chaque impulsion potentiellement en position de chaque bit du message de la réponse, la valeur pour lesdites trois variables ainsi que le nombre d'échantillons associés, donnant ainsi un indicateur de qualité de la valeur de l'impulsion,
   des informations indiquant les conditions de détection de la réponse.

Selon une caractéristique de l'invention, le message synthétique comporte la valeur et la qualité de chaque bit du message mode S.

Selon une caractéristique de l'invention, dès qu'au moins deux réponses reçues sont considérées comme non décodées ou non décodables par le module de traitement de signal, le module de traitement de données (TD) reconstruit une réponse en procédant aux étapes suivantes :
- il établit pour chaque bit du message Mode S un estimateur basé sur l'exploitation des informations des impulsions potentielles du bit pour toutes les réponses reçues, ces informations étant pour chaque variable de sortie du récepteur radar: le nombre d'échantillons cohérents de la réponse, les drapeaux de qualité de la réponse, la valeur et le nombre d'échantillons de chaque impulsion, il décode pour chaque bit du message la position de l'impulsion ayant la plus grande valeur de l'estimateur et affecte une qualité à chaque bit, toujours selon la valeur de l'estimateur et la présence de plusieurs impulsions par bit,
- il détecte les erreurs en exploitant le nouveau décodage du message.

Selon une caractéristique de l'invention, lorsqu'il est possible et nécessaire de corriger un message, le module de traitement de données tente de corriger les bits du message en exploitant les nouvelles qualités de chaque bit.

Selon une caractéristique de l'invention, pour accroître les possibilités de succès, la tentative de décodage du message s'effectue indépendamment :
- sur les deux variables SOMME et MONOPULSE,
- sur les deux variables DIFFERENCE et MONOPULSE,
- sur l'ensemble des trois variables SOMME, DIFFERENCE et MONOPULSE pour exploiter au mieux les caractéristiques de la pollution (amplitude, dépointage, non stabilité temporelle, ...) puisqu'il suffit d'un succès parmi les 3 tentatives pour considérer le message mode S comme correctement décodé.

Selon une caractéristique de l'invention, lorsque l'on dispose d'une puissance de calcul temps réel suffisante, on réduit le nombre d'interrogations sélectives en exploitant celles déjà reçues au fur et à mesure dans chaque lobe.

Selon une caractéristique de l'invention, en fin de lobe, on exploite, hors temps réel, les réponses reçues pour pouvoir décoder le message si celui n'a pas eu lieu pour une des réponses du lobe.

Selon une caractéristique de l'invention, pour un radar fonctionnant à des vitesses de rotation supérieures à environ 4s pour un tour, on supprime les périodes All Call (AC) et Roll Call (RC) afin de mieux répartir le temps radar en fonction de la nature des cibles présentes dans le lobe du radar.

Selon une caractéristique de l'invention, les interrogations en mode S sont placées en tenant compte de l'ensemble des plots SSR/SIF présents dans le lobe.

La présente invention sera mieux comprise à la lecture de la description détaillée d'un mode de réalisation, pris à titre d'exemple non limitatif et illustré par le dessin annexé, sur lequel :
- la figure 1, mentionnée ci-dessus, est un chronogramme montrant un exemple de réponse Mode S,
- la figure 2, mentionnée ci-dessus, est un chronogramme montrant des exemples de pollution d'une réponse Mode S,
- les figures 3 à 5, mentionnées ci-dessus, sont des chronogramme montrant trois exemples caractéristiques de pollutions différentes de réponses Mode S,
- la figure 6 est un bloc-diagramme en trois parties, les deux premières, déjà décrites ci-dessus et représentées en haut et au milieu de la figure, se rapportant à des procédés de l'art antérieur, et la troisième, représentée en bas de la figure, schématisant les étapes principales du procédé de l'invention,
- la figure 7 est un chronogramme d'une partie de réponse Mode S mettant en évidence les problèmes rencontrés par les procédés de correction de l'art antérieur, et
- la figure 8 est un bloc-diagramme d'un dispositif de mise en oeuvre de l'invention correspondant à une partie de la fonction « EXTRACTEUR FAISCEAU MODE S » de la figure 6

Sur la partie inférieure de la figure 6, se rapportant au procédé de l'invention, on a représenté, dans l'étage 2 de traitement de signal, plusieurs séquences successives de traitements de détection et de détermination de qualité (le nombre de celles-ci est lié aux échecs successifs de décodage). On effectue un traitement de détection des réponses sur les canaux Σ et Δ et un traitement de détermination de leur qualité pour les canaux Σ et Δ, pour l'information Δ/Σ (« monopulse »), en tenant compte de la valeur des histogrammes Σ, Δ et Δ/Σ. Les résultats de ces traitements sont envoyés à des circuits 15 de détection d'erreurs et de correction d'erreurs et en cas d'échec à la fois à un extracteur 14 en mode S. Le séquencement des interrogations est commandé par un dispositif 16 de cadencement et un dispositif 17 de GST en mode S.

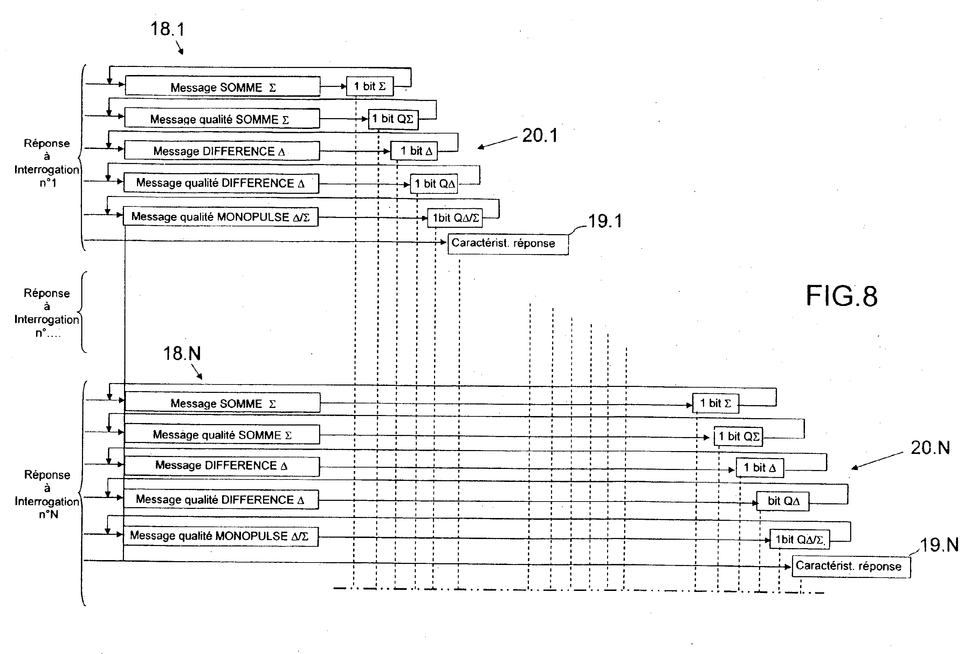

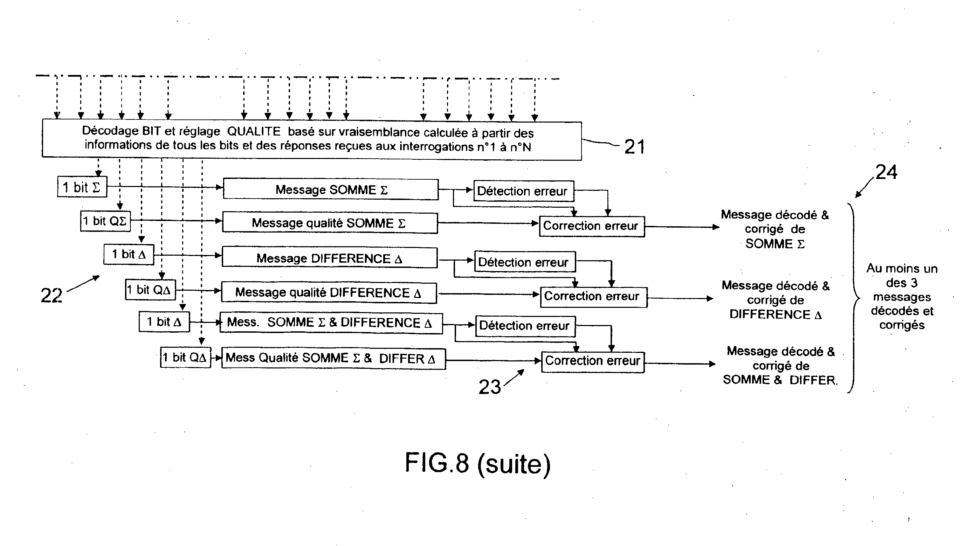

On va maintenant décrire en référence à la figure 8 le traitement conforme à l'invention lorsque plusieurs réponses ne peuvent être décodées par suite de pollution. L'étage 2 de traitement de signal (TS) délivre, pour chaque réponse sélective élaborée (jusqu'à 5 à 10 par lobe), les informations de message (18.1 à 18.N) suivantes (identiques pour la suite de réponses 1 à N, puisque la question posée, et par suite la réponse reçue, est toujours la même tant qu'il y a échec) :
➢ le nombre de bits présents dans le message (constitué de 56 ou 112 bits):
   - pour le canal Σ,
   - pour le canal Δ,
➢ la qualité de ces mêmes bits :
   - pour le canal Σ,
   - pour le canal Δ,
   - pour l'information monopulse Δ/Σ,
➢ les caractéristiques globales de la réponse (19.1 à 19.N): résultat des histogrammes Σ, Δ, Δ/Σ, valeur, nombre maximal d'échantilllons cohérents avec la valeur attendue, des indicateurs de « garbling » (pollution), ....

Ces informations sont mémorisées dans des registres à décalage re-bouclables (20.1 à 20.N) pour relire les données sans les perdre. Pour chaque impulsion potentielle du message (c'est-à-dire pour sa position théorique plus ou moins la tolérance admise sur cette position), on établit (21) un estimateur exploitant toutes les informations précédentes pour chacune des variables (en SOMME, en DIFFERENCE et en MONOPULSE) de toutes les réponses reçues. On en déduit les informations suivantes pour chaque bit du message :
- la valeur du bit suivant la position de l'impulsion ayant la plus grande valeur déterminée par l'estimateur,
- la qualité associée à chaque bit, toujours selon la valeur affectée par l'estimateur et la présence de plusieurs impulsions par bit (22).

Puis, on procède de façon classique, comme cela se fait au niveau du traitement de signal pour détecter les erreurs (23) en exploitant ces nouveaux messages de synthèse élaborés sur l'ensemble des réponses disponibles du lobe. En cas de besoin, on tente de corriger les bits du message en exploitant les nouvelles qualités de chaque bit (c'est aussi la même fonction que celle du TS). Enfin, on obtient (24) des messages décodés pour les trois dites variables.

Pour accroître les possibilités de succès, la tentative de décodage du message peut s'effectuer indépendamment :
- sur les deux variables SOMME, et MONOPULSE
- sur les deux variables DIFFERENCE et MONOPULSE
- sur l'ensemble des trois variables SOMME, DIFFERENCE et MONOPULSE pour exploiter les caractéristiques de non stabilité de la pollution, si par exemple le multitrajet est décalé en azimut dans le lobe.

Si aucun des trois décodages et corrections n'est un succès, une nouvelle interrogation doit être faite. Si à nouveau la réponse obtenue n'est pas corrigée par le TS, le processus du TD décrit ci-dessus est refait complètement sur la base des trois réponses, et ainsi de suite jusqu'à succès.

Le succès de ce nouveau décodage par le TD permet de réduire le nombre d'interrogations sélectives à réaliser permettant ainsi de réduire l'utilisation de l'émetteur dont le cycle de charge (« duty cycle ») est limité, ce qui évite une saturation due à la charge lorsque le lobe d'antenne éclaire un grand nombre d'aéronefs. Ceci permet également de planifier plus d'aéronefs dans les périodes « Roll Call » suivantes et de capter des aéronefs Mode S plus rapidement (avec une probabilité PR de capter une réponse telle que PR=1) lors du démarrage d'une station radar (actuellement PR=0,5).

Ainsi, du fait que le traitement de décodage du message exploite l'ensemble des réponses reçues, il permet d'exploiter au mieux la non-stabilité de la pollution qui a fait échouer le décodage de chaque réponse prise séparément.

Par conséquent, le procédé de l'invention augmente nettement les chances de décoder correctement le message, car les garblings et multitrajets observés ne sont pas stables de réponse à réponse et donc ce ne sont pas toujours les mêmes bits du message qui sont mal décodés. Donc le procédé de l'invention permet, sans générer d'interrogation supplémentaire, de décoder un nouveau message de réponse *a priori* de meilleure qualité que celle de chaque réponse reçue individuellement.

Le traitement de l'invention est utile en cas d'environnement électromagnétique très pollué, sinon les procédés existants sont suffisants : ce n'est que parce qu'il y a eu échec sur une réponse que l'on doit reposer la question à la même cible.

Selon une caractéristique de l'invention, si le traitement en temps réel présente la puissance suffisante, il peut être appliqué à fur et à mesure dans le lobe et ainsi permettre de ne faire que le nombre d'interrogations sélectives nécessaire dès que les réponses précédentes exploitées transversalement permettent d'élaborer un message correct ou corrigeable. Ceci permet de traiter alors un bien plus grand nombre de cibles différentes. Sinon, sans ajout de puissance de calcul, en fin de lobe, on peut exploiter, hors temps réel, les réponses reçues et se donner une chance supplémentaire de décoder le message si celui n'a pas eu lieu pour une des réponses du lobe.

Le traitement de décodage du message exploitant l'ensemble des réponses reçues permet d'exploiter au mieux la non stabilité de la pollution qui a fait échouer le décodage de chaque réponse séparément telle que la pollution dite « garbling » par des réponses asynchrones SSR, des multitrajets qui de réponse à réponse ne sont pas constants suite au déplacement de l'avion en distance (la différence de marche évolue, donc le battement entre l'onde directe et l'onde réfléchie donne un signal différent, sans parler de la possibilité de modification du réflecteur).

Par ailleurs, l'utilisation débutante du protocole Mode S sur les radars militaires IFF tournant à des vitesses de rotation plus élevées (1, 2 ou 4 secondes/tour) et nécessitant de conserver une compatibilité pour les modes SIF classiques (modes 1 et 2) mais aussi les demandes de radars civils capables de performances « data-link » à des vitesses de rotations élevées (4sec/tour) mettent en évidence que le séquencement classique proposé par la FAA, EUROCONTROL ou le STANAG n'est plus approprié. En effet, pour des radars à vitesse de rotation élevée, le séquencement rigide basé sur des périodes « All Call » (AC) et « Roll Call » (RC) limite à la fois le nombre d'interrogations SIF dans le lobe, mais aussi les périodes allouées aux transmissions Mode S sélectives pour le data-link.

Les antennes IFF, n'étant pas des antennes à balayage électronique, le temps d'éclairement de la cible est directement lié à la vitesse de rotation du radar. L'allocation de manière rigide des périodes pour les différents protocoles : AC pour le SIF et RC pour le Mode S ne permet pas d'adapter le radar à la nature et à la quantité des cibles SSR/SIF ou Mode S présentes dans le lobe.

Selon une application avantageuse de l'invention, on propose de ne plus allouer de manière rigide les périodes AC et RC. Ainsi, en mélangeant les deux protocoles, on peut optimiser le temps radar en fonction des cibles présentes dans le lobe (SIF ou Mode S) et en fonction des types d'interrogations à réaliser (SIF ou Mode S data-link). Pour éviter les garblings soit entre les interrogations mode S et les réponses SIF, soit entre les réponses Mode S et les réponses SIF, le placement des interrogations Mode S prend en compte les positions prédites des réponses SIF d'une manière analogue à celle faite pour le placement des réponses Mode S entre elles dans les périodes RC.

Néanmoins, dans des zones chargées en aéronefs, la probabilité qu'une réponse Mode S soit polluée par une ou plusieurs réponses SSR (synchrone ou asynchrone) est assez élevée. En effet, il ne sera pas toujours possible d'imbriquer les transactions Mode S (interrogations et réponses) parmi les transactions synchrones SSR (interrogation et réponses). Celles-ci, selon la distribution en distance et azimut des aéronefs, pouvant constituer un bloc de réponses tellement localement dense qu'il ne soit pas possible d'imbriquer et qu'il faille faire chevaucher les réponses Mode S avec les réponses SSR synchrones.

Dans de tels cas, la présente invention permet d'exploiter la non-stationnarité de ces cas de chevauchement et ainsi de décoder les réponses Mode S, et donc permettre la mise en pratique de la suppression des périodes AC et RC pour l'optimisation du temps radar en fonction de la nature des cibles.

## Revendications

1. Procédé de traitement de réponses de cibles interrogées par un radar de surveillance pour des interrogations en mode S, indépendamment pour chaque cible présente dans le lobe de réception du radar, comprenant :
- une étape d'au moins une interrogation des les différentes cibles présentes dans le lobe de réception du radar SSR,
- une étape de réception, après chaque interrogation, de l'ensemble des signaux de réponse reçus pour ce lobe pour chaque cible,
- une étape de détection des réponses mise en oeuvre par un module de traitement de signal (TS)
- une étape de détection et de correction d'erreurs et
- une étape d'extraction des plots correspondants,
**caractérisé en ce que** ledit traitement de détection et de détermination de qualité des signaux est mis en oeuvre, en cas d'échec de décodage par le traitement de signal, par un module de traitement de données (TD) qui constitue un message synthétique avec l'ensemble mémorisé des réponses à chaque interrogation pour une même cible, établi, pour chaque bit de chaque message, la valeur et la qualité de ce bit et effectue la détection et la correction d'erreurs à partir de ce message synthétique et **en ce que** pour chaque réponse Mode S non décodée à la suite d'une tentative de correction effectuée sans succès par le traitement de signal, ou non décodable par suite d'un trop grand nombre de bits de mauvaise qualité dans un message incorrect pour tenter la correction, le module de traitement de signal (TS) transmet :
- la valeur de la réponse pour les trois variables de sortie du récepteur radar SOMME, DIFFERENCE et MONOPULSE ainsi que le nombre maximum d'échantillons cohérents avec cette valeur pour les trois variables,
- pour chaque impulsion potentiellement en position de chaque bit du message de la réponse, la valeur pour lesdites trois variables ainsi que le nombre d'échantillons associés, donnant ainsi un indicateur de qualité de la valeur de l'impulsion,
des informations indiquant les conditions de détection de la réponse.

2. Procédé selon la revendication 1, **caractérisé en ce que** le message synthétique comporte la valeur et la qualité de chaque bit du message mode S.

3. Procédé selon l'une des revendications précédentes, **caractérisé en ce que**, dès qu'au moins deux réponses reçues sont considérées comme non décodées ou non décodables par le module de traitement de signal, le module de traitement de données (TD) reconstruit une réponse en procédant aux étapes suivantes :
- il établit pour chaque bit du message Mode S un estimateur basé sur l'exploitation des informations des impulsions potentielles du bit pour toutes les réponses reçues, ces informations étant pour chaque variable de sortie du récepteur radar: le nombre d'échantillons cohérents de la réponse, les drapeaux de qualité de la réponse, la valeur et le nombre d'échantillons de chaque impulsion, il décode pour chaque bit du message la position de l'impulsion ayant la plus grande valeur de l'estimateur et affecte une qualité à chaque bit, toujours selon la valeur de l'estimateur et la présence de plusieurs impulsions par bit,
- il détecte les erreurs en exploitant le nouveau décodage du message.

4. Procédé selon la revendication précédente, **caractérisé en ce que** lorsqu'il est possible et nécessaire de corriger un message, le module de traitement de données tente de corriger les bits du message en exploitant les nouvelles qualités de chaque bit.

5. Procédé selon l'une des revendications précédentes, **caractérisé en ce que** pour accroître les possibilités de succès, la tentative de décodage du message s'effectue indépendamment :
- sur les deux variables SOMME et MONOPULSE,
- sur les deux variables DIFFERENCE et MONOPULSE,
- sur l'ensemble des trois variables SOMME, DIFFERENCE et MONOPULSE pour exploiter au mieux les caractéristiques de la pollution (amplitude, dépointage, non stabilité temporelle, ...) puisqu'il suffit d'un succès parmi les 3 tentatives pour considérer le message mode S comme correctement décodé

6. Procédé selon l'une des revendications précédentes, **caractérisé en ce que** lorsque l'on dispose d'une puissance de calcul temps réel suffisante, on réduit le nombre d'interrogations sélectives en exploitant celles déjà reçues au fur et à mesure dans chaque lobe.

7. Procédé selon l'une des revendications 1 à 6, **caractérisé en ce que**, en fin de lobe, on exploite, hors temps réel, les réponses reçues pour pouvoir décoder le message si celui n'a pas eu lieu pour une des réponses du lobe.

8. Procédé selon l'une des revendications précédentes, **caractérisé en ce que** pour un radar fonctionnant à des vitesses de rotation supérieures à environ 4s pour un tour, on supprime les périodes All Call (AC) et Roll Call (RC) afin de mieux répartir le temps radar en fonction de la nature des cibles présentes dans le lobe du radar.

9. Procédé selon la revendication 8, **caractérisé en ce que** les interrogations en mode S sont placées en tenant compte de l'ensemble des plots SSR/SIF présents dans le lobe.

## Patentansprüche

1. Verfahren zum Verarbeiten von Antworten von einem Überwachungsradar abgefragten Zielen für im S-Modus getätigte Abfragen unabhängig für jedes Ziel, das in der Empfangskeule des Radars vorliegt, das Folgendes beinhaltet:
einen Schritt des wenigstens einmaligen Abfragens der verschiedenen in der Empfangskeule des SSR-Radars vorliegenden Ziele;
einen Schritt des Empfangens, nach jeder Abfrage, aller für die Keule für jedes Ziel empfangenen Antwortsignale;
einen Schritt des Erkennens von Antworten, implementiert durch ein Signalverarbeitungsmodul (TS);
einen Schritt des Erkennens und Korrigierens von Fehlern; und
einen Schritt des Extrahierens von entsprechenden Echoanzeigen;
**dadurch gekennzeichnet, dass** die Signalqualitätserkennungs- und - ermittlungsverarbeitung im Falle eines Ausfalls der Decodierung durch die Signalverarbeitung von einem Datenverarbeitungsmodul (TD) implementiert wird, das eine synthetische Nachricht mit allen gespeicherten Antworten auf jede Abfrage für dasselbe Ziel bildet, für jedes Bit jeder Nachricht Wert und Qualität dieses Bits feststellt und Fehler auf der Basis dieser synthetischen Nachricht erkennt und korrigiert, und dadurch, dass das Signalverarbeitungsmodul (TS) für jede S-Modus-Antwort, die nach einem durch die Signalverarbeitung durchgeführten erfolglosen Korrekturversuch nicht codiert wird oder die aufgrund einer zu großen Zahl von Bits schlechter Qualität in einer inkorrekten Nachricht zum Versuchen der Korrektur nicht decodiert werden konnten, Folgendes überträgt:
den Wert der Antwort für die drei Ausgangsvariablen SUMME, DIFFERENZ und MONOPULS des Radarempfängers sowie die maximale Anzahl von Samples, die mit diesem Wert für die drei Variablen kohärent sind;
den Wert für die drei Variablen, für jeden Impuls, der sich potentiell in der Position jedes Bits der Antwortnachricht befindet, sowie die Anzahl von assoziierten Samples, so dass ein Impulswert-Qualitätsindikator bereitgestellt wird;
Informationen, die die Bedingungen zum Erkennen der Antwort anzeigen.

2. Verfahren nach Anspruch 1, **dadurch gekennzeichnet, dass** die synthetische Nachricht Wert und Qualität jedes Bits der S-Modus-Nachricht umfasst.

3. Verfahren nach einem der vorherigen Ansprüche, **dadurch gekennzeichnet, dass** das Datenverarbeitungsmodul (TD), sobald wenigstens zwei empfangene Antworten vom Signalverarbeitungsmodul als nicht decodiert oder nicht decodiert angesehen werden, eine Antwort durch Ausführen der folgenden Schritte rekonstruiert:
Erstellen, für jedes Bit der S-Modus-Nachricht, eines Schätzglieds auf der Basis der Benutzung von Informationen über die potentiellen Impulse des Bits für alle empfangenen Antworten, wobei diese Informationen für jede Ausgangsvariable des Radarempfängers die Anzahl von kohärenten Samples der Antwort, die Qualitätsflags der Antwort, Wert und Anzahl von Samples jedes Impulses sind, Decodieren, für jedes Bit der Nachricht, der Position des Impulses mit dem größten Wert des Schätzgliedes und Zuordnen einer Qualität zu jedem Bit, immer gemäß dem Wert des Schätzglieds und in Anwesenheit von mehreren Impulsen pro Bit;
Erkennen der Fehler durch Verwenden der neuen Decodierung der Nachricht.

4. Verfahren nach dem vorherigen Anspruch, **dadurch gekennzeichnet, dass**, wenn eine Nachricht korrigiert werden kann und muss, das Datenverarbeitungsmodul versucht, die Bits der Nachricht unter Nutzung der neuen Qualitäten jedes Bits zu korrigieren.

5. Verfahren nach einem der vorherigen Ansprüche, **dadurch gekennzeichnet, dass** zum Erhöhen der Erfolgsmöglichkeiten der Versuch des Decodierens der Nachricht unabhängig durchgeführt wird:
an den zwei SUMME- und MONOPULS-Variablen;
an den zwei DIFFERENZ- und MONOPULS-Variablen;
an alle drei SUMME-, DIFFERENZ- und MONOPULS-Variablen, um die Charakteristiken der Verschmutzung (Amplitude, Fehlausrichtung, vorübergehender Stabilitätsmangel usw.) am besten zu nutzen, da ein erfolgreicher Versuch aus den 3 Versuchen ausreicht, damit die S-Modus-Nachricht als korrekt decodiert angesehen werden kann.

6. Verfahren nach einem der vorherigen Ansprüche, **dadurch gekennzeichnet, dass**, wenn eine ausreichende Echtzeit-Rechenleistung zur Verfügung steht, die Anzahl von selektiven Abfragen durch Verwenden derjenigen reduziert wird, die schrittweise bereits in jeder Keule empfangen wurden.

7. Verfahren nach einem der Ansprüche 1 bis 6, **dadurch gekennzeichnet, dass** die empfangenen Antworten am Keulenende nicht in Echtzeit verwendet werden, so dass die Nachricht decodiert werden kann, wenn dies nicht für eine der Antworten von der Keule aufgetreten ist.

8. Verfahren nach einem der vorherigen Ansprüche, **dadurch gekennzeichnet, dass** für ein Radar, das bei Drehgeschwindigkeiten über etwa 4s pro Umdrehung arbeitet, die All Call (AC) und Roll Call (RC) Perioden entfernt werden, um die Radarzeit in Abhängigkeit von der Natur der in der Keule des Radars vorhandenen Ziele besser zu verteilen.

9. Verfahren nach Anspruch 8, **dadurch gekennzeichnet, dass** die Abfragen im S-Modus durch Berücksichtigten aller in der Keule vorhandenen SSR/SIF-Echoanzeigen gesetzt werden.

## Claims

1. A method for processing responses from targets interrogated by a surveillance radar for interrogations in mode S, independently for each target present in the reception lobe of the radar, comprising:
a step of interrogating the different targets present in the reception lobe of the SSR radar at least once;
a step of receiving, after each interrogation, all of the response signals received for this lobe for each target;
a step of detecting responses implemented by a signal process module (TS);
a step of detecting and correcting errors; and
a step of extracting corresponding blips;
**characterised in that** said signal quality detection and determination process is implemented, in the event of failure in decoding by the signal processing, by a data processing module (TD) that forms a synthetic message with all the responses stored to each polling for the same target, establishes, for each bit of each message, the value and the quality of this bit and detects and corrects errors on the basis of this synthetic message, and **in that**, for each mode S response non decoded following an unsuccessful attempt at correction carried out by the signal processing, or which could not be decoded due to an excessive number of poor quality bits in an incorrect message for attempting the correction, the signal processing module (TS) transmits:
the value of the response for the three output variables, SUM, DIFFERENCE and MONOPULSE, of the radar receiver, as well as the maximum number of samples coherent with this value for the three variables;
the value for said three variables, for each pulse that is potentially in the position of each bit of the response message, as well as the number of associated samples, thus providing a pulse value quality indicator;
information indicating the conditions for detecting the response.

2. The method according to claim 1, **characterised in that** the synthetic message comprises the value and the quality of each bit of the mode S message.

3. The method according to any one of the preceding claims, **characterised in that**, as soon as at least two received responses are considered to be non-decoded or non-decodable by the signal processing module, the data processing module (TD) reconstructs a response by performing the following steps:
establishing, for each bit of the mode S message, an estimator based on the use of information relating to the potential pulses of the bit for all of the received responses, with this information being, for each output variable of the radar receiver, the number of coherent samples of the response, the response quality flags, the value and the number of samples of each pulse, decoding, for each bit of the message, the position of the pulse with the greatest value of the estimator and assigning a quality to each bit, always according to the value of the estimator and the presence of a plurality of pulses per bit;
detecting the errors by using the new decoding of the message.

4. The method according to the preceding claim, **characterised in that**, when it is possible and necessary for a message to be corrected, the data processing module attempts to correct the bits of the message by using the new qualities of each bit.

5. The method according to any one of the preceding claims, **characterised in that**, in order to increase the possibilities of success, the attempt at decoding the message is carried out independently:
on the two SUM and MONOPULSE variables;
on the two DIFFERENCE and MONOPULSE variables;
on all the three SUM, DIFFERENCE and MONOPULSE variables so as to best use the characteristics of the pollution (amplitude, misalignment, temporary non-stability, etc.) since one successful attempt out of the 3 attempts is sufficient for the mode S message to be considered to be correctly decoded.

6. The method according to any one of the preceding claims, **characterised in that**, when sufficient real time computation power is available, the number of selective interrogations is reduced by using those already progressively received in each lobe.

7. The method according to any one of claims 1 to 6, **characterised in that**, at the end of a lobe, the received responses are used, outside of real time, to be able to decode the message if this has not occurred for one of the responses from the lobe.

8. The method according to any one of the preceding claims, **characterised in that**, for a radar operating at rotation speeds greater than approximately 4s per revolution, the All Call (AC) and Roll Call (RC) periods are removed so as to better distribute the radar time as a function of the nature of the targets present in the lobe of the radar.

9. The method according to claim 8, **characterised in that** the interrogations in mode S are placed by taking into account all the SSR/SIF blips present in the lobe.
